# EUROPÄISCHE PATENTSCHRIFT

(11) **EP 1 183 449 B1**
(45) Veröffentlichungstag und Bekanntmachung des Hinweises auf die Patenterteilung: **05.07.2006**
(21) Anmeldenummer: 00989811.5
(22) Anmeldetag: 29.11.2000
(51) Int. Cl.: F01P 7/16

(54) **REGELVENTIL**
CONTROL VALVE
VANNE DE REGULATION

(30) Priorität: 14.12.1999 DE 19960190
(43) Veröffentlichungstag der Anmeldung: 06.03.2002
(73) Patentinhaber: ROBERT BOSCH GMBH, 70442 Stuttgart (DE)
(72) Erfinder: WILLIGES, Martin, D-71254 Ditzingen (DE)
(86) Internationale Anmeldenummer: PCT/DE2000/004244
(87) Internationale Veröffentlichungsnummer: WO 2001/044632

(56) Entgegenhaltungen:
- EP-A- 0 165 395
- EP-A- 0 771 679
- EP-A- 0 820 886
- EP-A- 0 874 147
- WO-A-98/54447
- DE-A- 3 900 866

## Beschreibung

### Stand der Technik

Die Erfindung geht von einem Regelventil nach dem Oberbegriff des Anspruchs 1 aus.

Häufig wird in Kühlkreisläufen von Brennkraftmaschinen für Fahrzeuge zur Regelung der Temperatur ein Thermostatventil verwendet. Dieses Ventil weist einen Ventilkörper auf, der durch einen Dehnungsaktuator abhängig von einer Kühlmitteltemperatur gesteuert wird und einen Strömungszweig zu einem Wärmetauscher freigibt oder schließt und eine Bypassleitung entsprechend komplementär verstellt, damit die optimale Betriebstemperatur der Brennkraftmaschine möglichst schnell erreicht und konstant gehalten wird. Derartige Thermostatventile sind wegen der langsam ablaufenden Wärmeübertragung auf den Dehnungsaktuator träge.

Aus der DE 41 09 498 A1 sind eine Vorrichtung und ein Verfahren zur Regelung der Temperatur einer Brennkraftmaschine eines Kraftfahrzeugs bekannt. Der Kühlkreislauf der Brennkraftmaschine umfaßt einen Wärmetauscher, der durch eine Bypassleitung umgangen werden kann. Zur Regelung des Kühlmittelstroms ist im Mündungsbereich der Bypassleitung ein Regelventil vorgesehen, dessen Stellung über eine Steuerleitung durch eine Steuereinheit eingestellt wird, so daß mehr oder weniger Kühlmittel am Wärmetauscher vorbei geleitet werden kann. Dabei gibt die Steuereinrichtung einen Temperatursollwert vor, der in Abhängigkeit von verschiedenen Einsatzbedingungen und Betriebsparametern der Brennkraftmaschine ermittelt wird. Der Sollwert wird mit dem Istwert der Motortemperatur verglichen und aus dem Ergebnis eine Stellgröße für das Regelventil gebildet. Ein Kühlgebläse, das dem Wärmetauscher zugeordnet ist, wird über eine separate Leitung ebenfalls von der Steuereinrichtung angesteuert.

Aus der DE 197 31 248 A1 ist ein Regelventil bekannt, das den Zulauf des Kühlmittels einer Brennkraftmaschine eines Kraftfahrzeugs in den Wärmetauscher einer Heizungsanlage einstellt. Es besitzt als Absperrelement einen Schieber und als Antrieb einen am Schieber angeordneten Dauermagneten, der im Magnetfeld einer mit dem Regelstrom beaufschlagbaren Antriebsspule in Stellrichtung des Schiebers verschiebbar angeordnet ist. In der Gegenrichtung wird das Regelventil durch eine Rückstellfeder bewegt, so daß es in Abhängigkeit von der Größe des jeweils an der Antriebsspule anliegenden Regelstroms stufenlos einstellbar ist.

Bei den bekannten Regelventilen wird die Ventilstellung nicht erfaßt und an die Steuereinheit zurückgegeben, so daß die jeweilige Ventilposition nicht bekannt ist. Da für ein gutes Regelverhalten des gesamten Thermomanagements aber eine möglichst genaue Kenntnis der Volumenströme in den einzelnen Zweigen des Kühlsystems erforderlich ist, sind zusätzliche Volumenstromsensoren vorzusehen.

Aus der DE 3200457 C2 ist ein Verfahren und eine Vorrichtung zur Steuerung eines elektromagnetischen Stellglieds bekannt. Dabei wird die Stellung eines Ventils erfaßt und in die Regelung einbezogen. An einem Summationspunkt werden der Istwert und der Sollwert des Regelkreises zusammengeführt und die Regelabweichung wird einer PI-Verstärkeranordnung zugeführt. Deren Ausgangssignal steuert über eine Gleichrichteranordnung einen Pulslängenmodulator, durch dessen Ausgangssignale wiederum ein Spannungsrampengenerator einschaltbar ist. Das Rampensignal wird zwei Spannungs-Strom-Wandlern zugeführt, durch die eine entsprechende Stromrampe erzeugt wird, die zwei elektromagnetische Stellglieder beaufschlagt. Die beiden elektromagnetischen Stellglieder können beispielsweise Elektomagnetventile sein, durch die ein pneumatischer oder hydraulischer Druck-Auf- bzw. Abbau in einem weiteren Stellglied gesteuert bzw. geregelt wird, wobei dessen Stellung wiederum als Istwert dem Summationspunkt zugeführt werden kann.

Aus der EP 0 665 381 B1 ist eine hydraulisch betätigte Armatur mit einem elektrischen Antriebsmotor, einer Pumpe und einer hydraulischen Schaltung eine sogenannte Kompakteinheit bekannt. Diese kann z.B. ein Ventil sein, das beidseitig von Druck beaufschlagt wird. Eine Richtungssteuerung des Ventils erfolgt über die Drehrichtungsumkehr des Antriebsmotors, der die Pumpe antreibt, die innerhalb der Kompakteinheit zwischen den beiden Anschlußleitungen des Ventils angeordnet ist. Demzufolge versorgt die Pumpe, je nach Drehrichtung, die Anschlußleitungen mit Druckmittel. Der Antriebsmotor wird dabei von einer zentralen Steuereinheit elektrisch angesteuert. In den Endstellungen des Ventilstellglieds befinden sich Endschalter, die ein Signal aussenden, welches einerseits den zugeordneten Stromleiter für den Antriebsmotor unterbricht und andererseits ein Kontrollelement der zentralen Steuereinheit aktiviert. Nach einer weiteren Ausgestaltung werden die Antriebsmotoren mittels eines Bussystems angesteuert, wobei die Endstellungen ebenfalls durch Endschalter erfasst werden. Für eine Anwendung in einem Thermomanagement-System ist es viel zu ungenau, nur die Endpositionen zu erfassen.

Aus der EP-A-0 820 886 ist eine Steuervorrichtung für die Luftmischung einer Fahrzeugklimaanlage bekannt. Sie besitzt eine erste übergeordnete Steuereinheit mit einem Mikroprozessor und einem Speicher, an dem Sensoren zur Ermittlung der Lufttemperatur im Fahrgastraum, der Außentemperatur, der Sonneneinstrahlung und der Ansaugtemperatur angeschlossen sind. Ferner ist eine Anzeige mit Schaltern angeschlossen, wobei ein Schalter zum Einschalten eines Kompressors, ein Schalter zum Anstellen der Klimaanlage sowie ein Temperatureinstellschalter zum Einstellen der Temperatur im Fahrgastraum dienen. Die übergeordnete Steuereinheit nimmt die Signale der Sensoren, Schalter usw. auf, führt Berechnungen anhand der Eingangssignale durch und übermittelt Daten zum Betätigen der Aktuatoren über ein Steuerkabel an die Aktuatoren. Die Aktuatoren besitzen ihrerseits eine integrierte zweite Steuereinheit, die einen Stellmotor für eine Regelklappe steuert und einen Istwertsensor in Form eines Potentiometers hat. Die zweite Steuereinheit erfüllt folgende Funktionen: Kommunizieren mit der übergeordneten Steuereinheit, Erzeugen eines Steuersignals für den Motor sowie Ausgeben eines Antriebssignals für den Motor. Die zweite Steuereinheit ist in der Lage den Aktuator selbstständig zu steuern, wobei er dazu notwendige Informationen von der übergeordneten Steuereinheit erhält.

Vorteile der Erfindung

Nach der Erfindung wertet die zweite, im Regelventil integrierte elektronische Steuereinheit außer den Signalen der übergeordneten Steuereinheit und der Positionsmesseinrichtung Signale externer Sensoren des Regelventils aus und benutzt sie zum Regeln.

Der im Regelventil integrierte Mikrocontroller ist in der Lage Signale der externen Sensoren zu verarbeiten. So können auf einfache Art Daten von Temperatursensoren und/oder von Druckdifferenzsensoren über Signalleitungen dem Mikrocontroller zugesandt werden, die nach Auswertung ebenfalls auf die zu ermittelnde Stellgröße wirken. Somit kann das Regelventil eine Solltemperatur und/oder einen gewünschten Volumenstrom in einem Strömungszweig zu einem Wärmetauscher selbstständig einregeln. Auch eine Eigendiagnose des Regelventils ist möglich, deren Ergebnis der ersten Steuereinheit zugeleitet werden kann.

Das erfindungsgemäße Regelventil befindet sich in einem übergeordneten Regelkreislauf mit einer ersten Steuereinheit, beispielsweise einem Kühlkreislauf einer Brennkraftmaschine. Die zweite Steuereinheit bildet mit dem Regelventil einen untergeordneten Regelkreislauf. Das Regelventil erhält somit eine eigene Steuerintelligenz und kann auch ohne übergeordnete erste Steuereinheit bei Ausfall diese wichtigen Funktionen übernehmen.

Gemäß einer Ausgestaltung der Erfindung verfügen die erste oder zweite Steuereinheit über eine Ausfallerkennung, die im Fall eines Ausfalls selbstständig auf Notlaufbetrieb umschaltet. Im Normalfall ist nur ein begrenzter Datenaustausch mit der ersten Steuereinheit nötig, sodass Signalleitungen eingespart werden können. Die Verbindung zur übergeordneten Steuereinheit wird vorwiegend benutzt, um dem Mikrocontroller des Regelventils den Sollwert für die Stellung des Ventilglieds vorzugeben.

Vorteilhafterweise ist der Mikrocontroller für unterschiedliche Ventilkennlinien programmierbar, sodass im Zuge einer Gleichteilstrategie möglichst viele gleiche Bauteile in verschiedenen Regelungen eingesetzt werden können. So können beispielsweise Regelventile in Kraftfahrzeugen in Einfachausführung ohne Thermomanagement und in höherwertiger Ausführung mit Thermomanagement eingesetzt werden. Damit besteht gleichzeitig die Möglichkeit, ein Regelventil zunächst als Einzelmodul zu verwenden mit der Option, es später durch ein zusätzliches Steuergerät auf Thermomanagement aufzurüsten. Es ist weiterhin denkbar, mehrere Regelventile mit einer Kommunikationsleitung zu verbinden und auf diese Art verschiedene Teilfunktionen zu koppeln, beispielsweise ein Kühlerventil mit einem Heizungsventil. Auch hierbei ist es von Vorteil, dass solche Systeme nicht ausschließlich auf ein übergeordnetes Steuergerät angewiesen sind, denn durch ihre Eigenintelligenz wird Aufwand für Datenübermittlung und Zeit eingespart.

Im Normalfall erhält die zweite Steuereinheit von der ersten Steuereinheit über eine Signalleitung einen Sollwert für die Position des Ventilglieds vorgegeben. In einer Ausgestaltung der Erfindung wird der Sollwert als analoges Signal vorgegeben, wobei dieses vor der Auswertung in einem digitalen Prozessor durch einen Analog-Digital-Wandler entsprechend umgeformt werden muss. Ein wesentlicher Vorteil analoger Signale ist die weite Verbreitung des Signalformats, sodass viele Geräte damit angesteuert werden können.

In einer weiteren Ausgestaltung wird der Sollwert als Pulsbreitensignal vorgegeben. Hierbei handelt es sich um ein digitales Signal, das einerseits leicht zu erzeugen ist und andererseits ohne Umwandlung ausgewertet werden kann. Für einen Einsatz im Kühlkreislauf einer Brennkraftmaschine sind die hohe Störsicherheit und die einfache Möglichkeit, eine Fehlfunktion der Ansteuerung zu erkennen und zu beheben besonders vorteilhaft. In einer weiteren Ausgestaltung liegt der Sollwert als eine Information über einen CAN-Bus vor. Vorzugsweise wird das Regelventil dazu an den im Kraftfahrzeug vorhandenen CAN-Bus (Controller Area Network) angeschlossen. Dabei ist nur ein Anschluss erforderlich, da die Kommunikation bidirektional erfolgt. Für eine Auswertung der Ventilstellung im Thermomanagement ist diese Variante besonders geeignet.

Der von der ersten Steuereinheit vorgegebene Sollwert wird in der zweiten Steuereinheit, einer logischen Schaltung oder dem Mikrocontroller, des Regelventils mit einem ermittelten Istwert verglichen und zu einer Stellgröße verarbeitet. Für die Ermittlung des Istwerts sieht die Erfindung mehrere Varianten vor. So kann zum einen der Istwert durch ein Drehpotentiometer, welches mit einer Antriebsachse des Ventilglieds gekoppelt ist, ermittelt werden. Diese Art der Positionserfassung ist sehr einfach, allerdings aufgrund mechanischer Berührung empfindlich gegen Verschleiß. Eine zweite Variante benutzt eine induktive oder kapazitive Wegmessung, die im Vergleich zur vorher genannten Methode wesentlich robuster ist. Auch durch GMR- oder AMR-Sensoren (Giant-Magneto-Resistiv; Anisotropic-Magneto-Resistiv) ist eine Winkelbestimmung auf magnetischer Weise möglich.

Schließlich kann der Istwert durch Messen der Lichtstärke einer Lichtstrecke ermittelt werden. Eine sehr günstige Variante ist die inkrementelle Positionserfassung des Istwerts mittels einer Lichtschranke. Zweckmäßigerweise treibt dabei der Antriebsmotor, ein Gleichstrommotor, über ein Getriebe das Ventilglied an, wobei ein Getrieberad oder ein separates Rad an einem Antriebsteil Markierungen aufweist, die von einem optischen Sensor erfaßt werden. Die vom Sensor erfaßten optischen Signale bilden ein Maß für die Bewegung des Ventilglieds.

Um einen Bezugspunkt zu erhalten, muß zunächst eine Referenzposition ermittelt werden, auf welche sich die nachfolgenden Messungen beziehen. Dazu ist nach der Erfindung ein mechanischer Anschlag vorgesehen. Der optische Sensor, der als Gabellichtschranke oder als Reflexlichtschranke ausgebildet sein kann, ist über eine Datenleitung mit der zweiten Steuereinheit verbunden. In dieser wird die Signalfolge erfaßt. Eine bestimmte Signalfolge kann einer genauen Position des Ventilglieds zugeordnet werden, so daß aus einer bestimmten Signalfolge auf die exakte Position geschlossen werden kann.

Vorteilhafterweise ist diese Messung berührungslos, so daß keinerlei Verschleiß auftritt. Außerdem ist sie sehr genau, da mit einfachen Mitteln eine Eigendiagnose durchgeführt werden kann, so kann beispielsweise beim Ausbleiben von optischen Signalen in einem bestimmten Zeitraum selbständig ein Kalibrierungsvorgang ausgelöst werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Kühlkreislauf einer Brennkraftmaschine mit einer Steuereinheit und einem erfindungsgemäßen Regelventil,
- Fig. 2: eine schematische Darstellung einer Lichtschranke zur inkrementellen Positionserfassung und

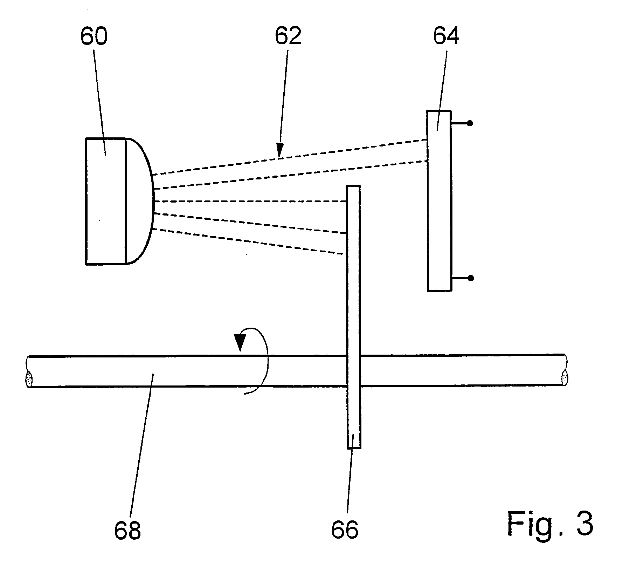

- Fig. 3: eine schematische Positionsmeßeinrichtung mit einer Blende.

### Beschreibung der Ausführungsbeispiele

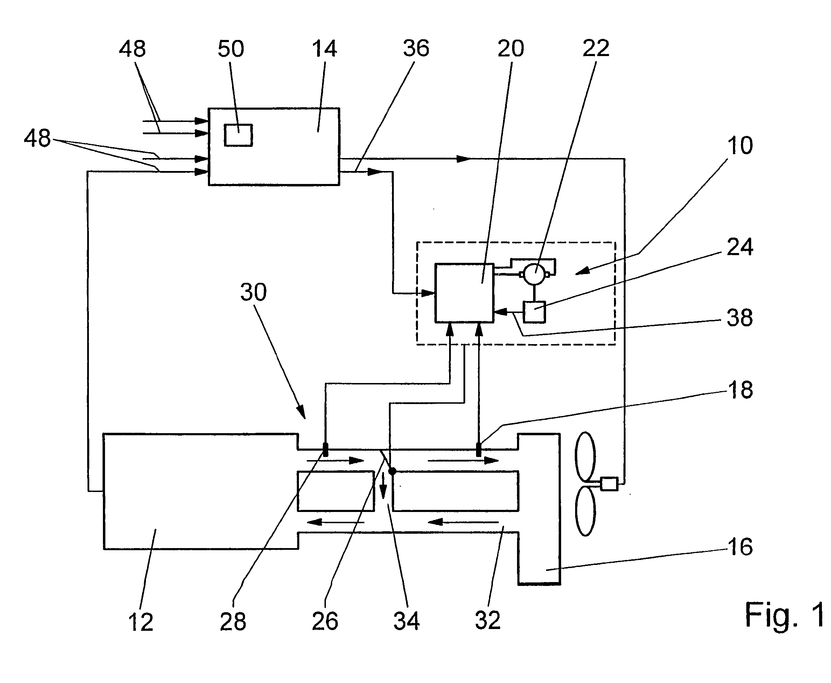

Als Regelkreislauf ist ein Kühlkreislauf 30 einer Brennkraftmaschine 12 dargestellt. Er umfaßt einen Wärmetauscher 16, der durch eine Bypassleitung 34 umgangen werden kann. Zur Regelung des Kühlmittelstroms ist an der Verzweigung der Bypassleitung 34 ein Regelventil 10 vorgesehen, dessen Ventilglied 26 als Klappe symbolisiert ist. Dieses gibt in Abhängigkeit von Steuerungsparametern einen Strömungszweig 32 zu dem Wärmetauscher 16 frei, drosselt oder schließt ihn und steuert eine Bypassleitung 34 komplementär. Die Position des Ventilglieds 26 wird durch einen Antrieb 22 vorzugsweise in Form eines elektrischen Gleichstrommotors oder eines proportional wirkenden Elektromagneten eingestellt, der durch eine zweite Steuereinheit 20 angesteuert wird (Fig. 1). Diese ist mit einer Positionsmeßeinrichtung 24, die einen Istwert 38 für die Position des Ventilglieds 26 liefert und dem Antrieb 22 in dem Regelventil 10 integriert, so daß das Regelventil 10 als autarkes Bauelement gefertigt und geprüft werden kann.

Die zweite Steuereinheit 20 erhält von einer ersten übergeordneten Steuereinheit 14, die für die Regelung des gesamten Kühlkreislaufs zuständig ist, einen Sollwert 36 vorgegeben. Dieser wird in der Steuereinheit 20 mit dem ermittelten Istwert 38 zu einer Stellgröße für das Ventilglied 26 verarbeitet, so daß dieses entsprechend durch den Antrieb 22 verstellt wird. Die zweite Steuereinheit 20 besitzt zweckmäßigerweise weitere Eingänge für zusätzliche Sensoren, beispielsweise einen Temperatursensor 28 und/oder einen Druckdifferenzsensor 18. Dadurch wird eine zusätzliche Sicherheit für die Ermittlung der Stellgröße des Ventilglieds 26 erreicht, wenn die erste Steuereinheit 14 ausfällt und die zweite Steuereinheit 20 autark arbeitet. Bei einer solchen Anwendung ist es zweckmäßig, daß als zweite Steuereinheit 20 ein Mikrocontroler eingesetzt wird. Das Regelventil 10 erhält somit alle wichtigen Daten direkt und ist aufgrund seiner durch den integrierten Mikrocontroller 20 gegebenen Intelligenz in der Lage die Stellung des Ventilglieds 26 selbständig einzuregeln. In einer einfachen Ausführung der Regelung des Kühlkreislaufs der Brennkraftmaschine 12 kann dadurch auf die erste Steuereinheit 14 verzichtet werden.

Der Sollwert 36, der von einem Sollwertgeber 50 der ersten Steuereinrichtung 14 in Abhängigkeit von Eingangssignalen 48, die Betriebsparameter und Umgebungsparameter der Brennkraftmaschine 12 erfaßt, und von gespeicherten Kennlinien oder Kennfeldern ermittelt wird, kann erfindungsgemäß als digitales Signal vorzugsweise über einen CAN-Bus, als analoges Signal oder Pulsbreitensignal an die zweite Steuereinrichtung 20 übertragen werden. Bei der Pulsbreitenmodulation wird mit einer bestimmten, nicht notwendigerweise konstanten Frequenz ein Puls variabler Länge vorgeben. Die Länge des Pulses wird einem Sollwert 36 zugeordnet. Beispielsweise wird eine Pulsdauer von 10 ms für einen linken Anschlag und eine Pulsdauer von 20 ms für einen rechten Anschlag verwendet, während dazwischen liegende Sollwerte 36 linear interpoliert werden. Das Ausbleiben der Pulse über eine bestimmte Grenzzeit wird als Fehler in der Ansteuerung interpretiert und kann zur Ausfallerkennung dienen. Das Ventilglied 26 kann dann z.B. in eine vorbestimmte, sichere Position laufen oder einfach stehenbleiben. Die Sollposition des Ventilglieds 26 kann einfach, störsicher und mit einer guten Auflösung mittels digitaler Steuereinheiten mit nur einer zusätzlichen elektrischen Leitung angesteuert werden.

Als Positionsmeßeinrichtung 24 sind verschiedene Varianten geeignet. So kann der Istwert 38 durch eine allgemein übliche, induktive, kapazitive oder magnetische Wegmessung ermittelt werden. Ebenso kann der Istwert 38 durch das Messen der Lichtstärke eines Lichtstrahls 62 ermittelt werden, indem eine Blende 66 abhängig von der Position des Ventilglieds 26 den Lichtstrahl 62 zwischen einer Lichtquelle 60 und einem Sensor 64 teilweise abschottet. Dazu ist die Blende 66, die als Schlitzscheibe oder Exzenterscheibe ausgebildet sein kann, mit einem Antriebselement 68 des Ventilglieds 26 verbunden. Ferner kann ein Drehpotentiometer, welches mit einem Antriebselement 58 des Ventilglieds 26 gekoppelt als Postionsmeßeinrichtung 24 verwendet werden und den Istwert 38 angeben.

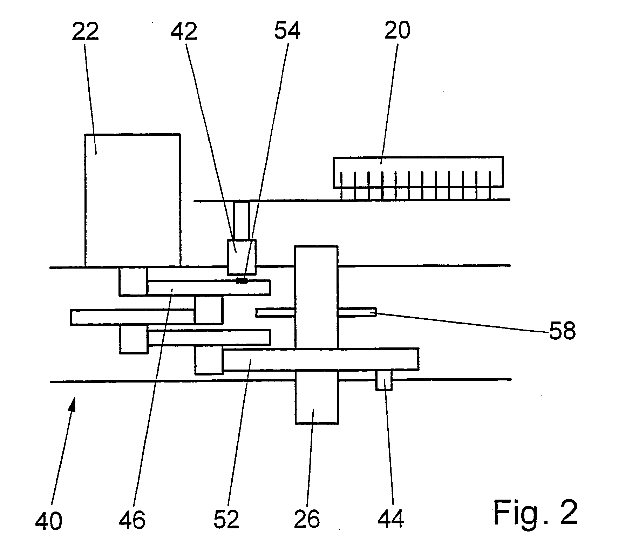

In einer weiteren Ausgestaltung der Erfindung wird der Istwert 38 durch inkrementelle Positionserfassung mittels einer Lichtschranke 42 ermittelt (Fig. 2). Hierbei treibt der Antrieb 22 über ein Getriebe 40 das Ventilglied 26 an. Auf einem ersten, direkt mit dem Antrieb 22 verbundenen Getrieberad 46 befinden sich Markierungen 54, die von einer Lichtschranke 42 erfaßt werden, z.B. einer Mikroreflexlichtschranke des Typs SG2BC der Firma Kodenshi. Die Markierung 54 kann auch auf einer separaten Scheibe 56 angebracht werden, die mit einem Antriebselement 58 des Ventilglieds 26 verbunden ist und mit der Lichtschranke 42 zusammenwirkt.

Das Getriebe 40 umfaßt ein weiteres Getrieberad 52, an dem ein Stift 44 befestigt ist. Bei Inbetriebnahme wird der Stift 44 an einen mechanischen, hier nicht dargestellten Endanschlag gefahren. Dieser dient als Referenzpunkt und zum Kalibrieren des Regelventils 10. In dieser Stellung erhält die Lichtschranke 42, die eine Gabellichtschranke oder eine Reflexlichtschranke sein kann, für eine bestimmte Zeit keine Impulse mehr.
Der mit der Lichtschranke 42 verbundene Mikrocontroller 20 wertet diesen Zustand als "Anschlag erreicht" aus und referenziert diese Position in eine Richtung. Bei Bedarf wird der gesamte Vorgang in entgegengesetzter Richtung wiederholt. In einfacher Weise können danach gewünschte Positionen durch erhaltene Impulsfolgen definiert werden. Um die Einstellung eines Arbeitspunkts über eine längere Zeit abzusichern, wird nach dem Empfangen einer bestimmten Anzahl von Impulsen, und wenn die Sollposition des Ventilglieds 26 in der Nähe eines Anschlags ist, ein Kalibrierungsvorgang ausgelöst. Wichtig für eine genaue Positionserfassung ist ebenfalls, daß sich die Stellung des Ventilglieds 26 nicht verändert, wenn der Antrieb 22 stromlos ist. Aus diesem Grund ist es zweckmäßig, das Getriebe 40 nahezu selbsthemmend auszubilden. Weil mit einer einzelnen Lichtschranke 42 die Drehrichtung, bzw. Bewegungsrichtung des Ventilglieds 26 nicht ohne weiteres feststellbar ist, wird zur Entscheidung, welche Drehrichtung vorliegt, die letzte Ansteuerungsrichtung des Antriebs 22 verwendet. Hierzu ist es erforderlich, daß der Antrieb zum Stillstand kommt, bevor er in der Richtung umgeschaltet wird, da anderenfalls für kurze Zeit, in der der Antrieb 22 abgebremst wird, die angenommene Bewegungsrichtung des Antriebs 22 mit der tatsächlichen nicht übereinstimmt. Die Stellrichtung des Ventilglieds 26 kann auch durch mehrere in Stellrichtung angeordnete Lichtschranken oder durch einen absolut kodierten, z.B. nach dem Grey-Code kodierten, optischen Geber ermittelt werden.

Bezugszeichen
- 10: Regelventil
- 12: Brennkraftmaschine
- 14: erste Steuereinheit
- 16: Wärmetauscher
- 18: Druckdifferenzsensor
- 20: zweite Steuereinheit
- 22: Antrieb
- 24: Positionsmeßeinrichtung
- 26: Ventilglied
- 28: Temperatursensor
- 30: Kühlkreislauf
- 32: Strömungszweig
- 34: Bypassleitung
- 36: Sollwert
- 38: Istwert
- 40: Getriebe
- 42: Lichtschranke
- 44: Stift
- 46: Getrieberad
- 48: Eingangssignal
- 50: Sollwertgeber
- 52: Getrieberad
- 54: Markierung
- 56: Scheibe
- 58: Antriebselement
- 60: Lichtquelle
- 62: Lichtstrahl
- 64: Sensor
- 66: Blende

- 68: Antriebselement

## Patentansprüche

1. Regelventil (10) für einen Regelkreislauf (30) einer Brennkraftmaschine (12), wobei der Regelkreislauf (30) eine übergeordnete Steuereinheit (14) aufweist, die in Abhängigkeit von mindestens einem Betriebsparameter und/oder der Umgebungstemperatur einen Strömungszweig (32) zu einem Wärmetauscher (16) freigibt, drosselt oder schließt und eine Bypassleitung (34) komplementär steuert, wobei das Regelventil (10) ein Ventilglied (26), einen Antrieb (22), einer Positionsmesseinrichtung (24) und eine zweite, im Ventilglied (26) integrierte elektronische Steuereinheit (20 mit einem Mikrocontroller aufweist, die einen von der übergeordneten Steuereinheit (14) des Regelkreislaufs (30) erzeugten Sollwert (36) mit einem ermittelten Istwert (38) der Position des Ventilglieds (26) zu einer Stellgröße für die Position des Ventilglieds (26) verarbeitet, **dadurch gekennzeichnet, dass** die zweite, im Regelventil (10) integrierte elektronische Steuereinheit (20) außer den Signalen der übergeordneten Steuereinheit (14) und der Positionsmesseinrichtung (24) Signale externer Sensoren (18, 28) des Regelventils (10) auswertet und zum Regeln benutzt.

2. Regelkreislauf (30), der eine übergeordnete Steuereinheit (14) aufweist, die in Abhängigkeit von mindestens einem Betriebsparameter und/oder der Umgebungstemperatur einen Strömungszweig (32) zu einem Wärmetauscher (16) freigibt, drosselt oder schließt und eine Bypassleitung (34) komplementär steuert, **dadurch gekennzeichnet, dass** er (30) ein Regelventil (10) gemäß Anspruch 1 aufweist.

3. Regelkreislauf (30) nach Anspruch 2, **dadurch gekennzeichnet, dass** als Sensor ein externer Temperatursensor (28) vorgesehen ist.

4. Regelkreislauf (30) nach Anspruch 2, **dadurch gekennzeichnet, dass** als Sensor ein eingebauter Druckdifferenzsensor (18) vorgesehen ist.

5. Regelkreislauf (30) nach einem der Ansprüche 2 bis 4, **dadurch gekennzeichnet, dass** mindestens eine Steuereinheit (14, 20) über eine Ausfallerkennung verfügt und im Fall eines Ausfalls der ersten Steuereinheit (14) auf einen Notlaufbetrieb umschaltet, bei dem die zweite Steuereinheit (20) Steuersignale von zusätzlichen Sensoren erhält.

6. Regelkreislauf (30) nach einem der Ansprüche 2 bis 5, **dadurch gekennzeichnet, dass** mindestens eine der Steuereinheiten (14, 20) für unterschiedliche Ventilkennlinien programmierbar ist.

7. Regelkreislauf (30) nach Anspruch 2, **dadurch gekennzeichnet, dass** der Sollwert (36) als analoges Signal vorgegeben wird.

8. Regelkreislauf (30) nach einem der Ansprüche 2 bis 4, **dadurch gekennzeichnet, dass** der Sollwert (36) als Pulsbreitensignal vorgegeben wird.

9. Regelkreislauf (30) nach einem der Ansprüche 2 bis 4, **dadurch gekennzeichnet, dass** der Sollwert (36) als digitale Information über einen CAN-Bus zum Regelventil (10) übertragen wird.

10. Regelkreislauf (30) nach einem der Ansprüche 2 bis 9, **dadurch gekennzeichnet, dass** der Istwert (38) durch eine Positionsmesseinrichtung in Form eines GMR- oder AMR-Sensors ermittelt wird.

11. Regelkreislauf (30) nach einem der Ansprüche 2 bis 9, **dadurch gekennzeichnet, dass** der Istwert (38) durch induktive oder kapazitive Wegmessung ermittelt wird.

12. Regelkreislauf (30) nach einem der Ansprüche 2 bis 9, **dadurch gekennzeichnet, dass** der Istwert (38) durch Messung der Lichtstärke einer Lichtstrecke, zwischen der eine Blende positionsabhängig für Abschottung sorgt, ermittelt wird.

13. Regelkreislauf (30) nach einem der Ansprüche 2 bis 9, **dadurch gekennzeichnet, dass** der Istwert (38) durch inkrementelle Positionserfassung mittels einer Lichtschranke (42) ermittelt wird.

14. Regelkreislauf (30) nach einem der Ansprüche 2 bis 13, **dadurch gekennzeichnet, dass** es mit mehreren in einem Regelkreislauf (30) befindlichen Regelventilen gekoppelt ist.

15. Regelkreislauf (30) nach Anspruch 13, **dadurch gekennzeichnet, dass** ein Gleichstrommotor (22) das Ventilglied (26) über ein Getriebe (40) verstellt, welches Markierungen (54) auf einem Getrieberad (46) oder einer separaten Scheibe (56) aufweist, die von einem optischen Sensor (42) erfasst werden.

16. Regelkreislauf (30) nach Anspruch 15, **dadurch gekennzeichnet, dass** das Getriebe (40) nahezu selbsthemmend ausgebildet ist.

17. Regelkreislauf (30) nach Anspruch 15 oder 16, **dadurch gekennzeichnet, dass** der optische Sensor (42) eine Gabellichtschranke oder eine Reflexlichtschranke ist.

18. Regelkreislauf (30) nach Anspruch 17, **dadurch gekennzeichnet, dass** mehrere optische Sensoren (42) vorgesehen sind.

19. Regelkreislauf (30) nach einem der Ansprüche 15 oder 17, **dadurch gekennzeichnet, dass** das Getriebe (40) an einem weiteren Getrieberad (52) einen Stift (44) aufweist, der als Anschlag zur Ermittlung einer Referenzposition dient.

20. Regelkreislauf (30) nach einem der Ansprüche 13 oder 16 bis 19, **dadurch gekennzeichnet, dass** der Antrieb (22) vor einer Richtungsumschaltung zum Stillstand kommt.

21. Regelkreislauf (30) nach Anspruch 13, **dadurch gekennzeichnet, dass** ein absolut kodierter, optischer Geber vorgesehen ist.

## Claims

1. Control valve (10) for a control circuit (30) of an internal combustion engine (12), the control circuit (30) having a superordinate control unit (14) which clears, throttles or closes a flow branch (32) to a heat exchanger (16) as a function of at least one operating parameter and/or the ambient temperature, the control valve (10) having a valve element (26), a drive (22), a position-measuring device (24) and a second electronic control unit (20) which is integrated into the valve element (26), has a microcontroller and processes a setpoint value (36) which is generated by the superordinate control unit (14) of the control circuit (30), with a determined actual value (38) for the position of the valve element (26) to form a manipulated variable for the position of the valve element (26), **characterized in that** the second electronic control unit (20) which is integrated into the control valve (10) evaluates not only the signals of the superordinate control unit (14) and of the position-measuring device (24) but also signals from external sensors (18, 28) of the control valve (10) and uses them for the control process.

2. Control circuit (30) which has a superordinate control unit (14) which clears, throttles or closes a flow branch (32) to a heat exchanger (16) as a function of at least one operating parameter and/or the ambient temperature, and controls a bypass line (34) in a complementary fashion, **characterized in that** said control circuit (30) has a control valve (10) according to Claim 1.

3. Control circuit (30) according to Claim 2,
**characterized in that** an external temperature sensor (28) is provided as a sensor.

4. Control circuit (30) according to Claim 2,
**characterized in that** an installed pressure difference sensor (18) is provided as a sensor.

5. Control circuit (30) according to one of Claims 2 to 4, **characterized in that** at least one control unit (14, 20) has a failure detection means and, if the first control unit (14) fails, it switches over to an emergency operating mode in which the second control unit (20) receives control signals from additional sensors.

6. Control circuit (30) according to one of Claims 2 to 5, **characterized in that** at least one of the control units (14, 20) can be programmed for different valve characteristic curves.

7. Control circuit (30) according to Claim 2,
**characterized in that** the setpoint value (36) is predefined as an analogue signal.

8. Control circuit (30) according to one of Claims 2 to 4, **characterized in that** the setpoint value (36) is predefined as a pulse-width signal.

9. Control circuit (30) according to one of Claims 2 to 4, **characterized in that** the setpoint value (36) is transmitted as digital information to the control valve (10) via a CAN bus.

10. Control circuit (30) according to one of Claims 2 to 9, **characterized in that** the actual value (38) is determined by a position-measuring device in the form of a GMR or AMR sensor.

11. Control circuit (30) according to one of Claims 2 to 9, **characterized in that** the actual value (38) is determined by inductive or capacitive displacement measurement.

12. Control circuit (30) according to one of Claims 2 to 9, **characterized in that** the actual value (38) is determined by measuring the light strength of a light path between which a shutter ensures partitioning occurs as a function of position.

13. Control circuit (30) according to one of Claims 2 to 9, **characterized in that** the actual value (38) is determined by incremental detection of position by means of a photoelectric barrier (42).

14. Control circuit (30) according to one of Claims 2 to 13, **characterized in that** it is coupled to a plurality of control valves which are located in a control circuit (30).

15. Control circuit (30) according to Claim 13,
**characterized in that** a d.c. motor (22) adjusts the valve element (26) by means of a gear mechanism (40) which has marks (54) on a gearwheel (46) or a separate disc (56) which are sensed by an optical sensor (42).

16. Control circuit (30) according to Claim 15,
**characterized in that** the gear mechanism (40) is of virtually self-locking design.

17. Control circuit (30) according to Claim 15 or 16, **characterized in that** the optical sensor (42) is a forked photoelectric barrier or a reflex light barrier.

18. Control circuit (30) according to Claim 17,
**characterized in that** a plurality of optical sensors (42) are provided.

19. Control circuit (30) according to one of Claims 15 or 17, **characterized in that** the gear mechanism (40) has, on a further gearwheel (52), a pin (44) which serves as a stop for determining a reference position.

20. Control circuit (30) according to one of Claims 13 or 16 to 19, **characterized in that** the drive (22) comes to a standstill before the direction is switched over.

21. Control circuit (30) according to Claim 13,
**characterized in that** an absolutely coded optical signal transmitter is provided.

## Revendications

1. Soupape de régulation (10) pour un circuit de régulation (30) d'un moteur à combustion interne (12), le circuit de régulation (30) présentant une unité de commande supérieure (14) qui, en fonction d'au moins un paramètre de fonctionnement et/ou de la température ambiante, libère, étrangle ou ferme une branche d'écoulement (32) vers un échangeur de chaleur (16), et qui commande en complément une conduite de dérivation (34), la soupape de régulation (10) comportant un organe de soupape (26), un entraînement (22), un dispositif de mesure de position (24) et une deuxième unité de commande électronique (20) intégrée dans l'organe de soupape (26) comprenant un micro-contrôleur, la deuxième unité de commande traitant une valeur de consigne (36) générée par l'unité de commande supérieure (14) du circuit de régulation (30) avec une valeur réelle déterminée (38) de la position de l'organe de soupape (26) pour former une grandeur de réglage pour la position de l'organe de soupape (26),
**caractérisée en ce que**
la deuxième unité de commande électronique (20) intégrée dans la soupape de régulation (10) exploite et utilise pour la régulation, outre les signaux de l'unité de commande supérieure (14) et du dispositif de mesure de position (24), également des signaux de capteurs externes (18, 28) de la soupape de régulation (10).

2. Circuit de régulation (30) présentant une unité de commande supérieure (14) qui, en fonction d'au moins un paramètre de fonctionnement et/ou de la température ambiante, libère, étrangle ou ferme une branche d'écoulement (32) vers un échangeur de chaleur (16), et qui commande en complément une conduite de dérivation (34),
**caractérisé en ce qu'**
il (30) présente une soupape de régulation (10) selon la revendication 1.

3. Circuit de régulation (30) selon la revendication 2,
**caractérisé en ce qu'**
un capteur de température externe (28) est prévu en tant que capteur.

4. Circuit de régulation (30) selon la revendication 2,
**caractérisé en ce qu'**
un capteur de pression différentielle intégré (18) est prévu en tant que capteur.

5. Circuit de régulation (30) selon l'une des revendications 2 à 4,
**caractérisé en ce qu'**
au moins une unité de commande (14, 20) dispose d'un système de détection de dysfonctionnement et dans le cas d'un dysfonctionnement de la première unité de commande (14), passe à un fonctionnement en mode dégradé dans lequel la deuxième unité de commande (20) reçoit des signaux de commande de capteurs supplémentaires.

6. Circuit de régulation (30) selon l'une des revendications 2 à 5,
**caractérisé en ce qu'**
au moins l'une des unités de commande (14, 20) est programmable pour différentes caractéristiques de soupape.

7. Circuit de régulation (30) selon la revendication 2,
**caractérisé en ce que**
la valeur de consigne (36) est prédéterminée sous forme de signal analogique.

8. Circuit de régulation (30) selon l'une des revendications 2 à 4,
**caractérisé en ce que**
la valeur de consigne (36) est prédéterminée sous forme de signal modulé en largeur d'impulsion.

9. Circuit de régulation (30) selon l'une des revendications 2 à 4,
**caractérisé en ce que**
la valeur de consigne (36) est transmise à la soupape de régulation (10) via un bus CAN sous forme d'information numérique.

10. Circuit de régulation (30) selon l'une des revendications 2 à 9,
**caractérisé en ce que**
la valeur réelle (38) est déterminée par un dispositif de mesure de position ayant la forme d'un capteur GMR ou AMR.

11. Circuit de régulation (30) selon l'une des revendications 2 à 9,
**caractérisé en ce que**
la valeur réelle (38) est déterminée par une mesure de trajet inductive ou capacitive.

12. Circuit de régulation (30) selon l'une des revendications 2 à 9,
**caractérisé en ce que**
la valeur réelle (38) est déterminée par la mesure de l'intensité lumineuse d'une trajectoire lumineuse dont un diaphragme assure la fermeture en fonction de sa position.

13. Circuit de régulation (30) selon l'une des revendications 2 à 9,
**caractérisé en ce que**
la valeur réelle (38) est déterminée par un enregistrement de position incrémentale au moyen d'une cellule de détection (42).

14. Circuit de régulation (30) selon l'une des revendications 2 à 13,
**caractérisé en ce qu'**
il est couplé avec plusieurs soupapes de régulation disposées dans un circuit de régulation (30).

15. Circuit de régulation (30) selon la revendication 13,
**caractérisé en ce qu'**
un moteur à courant continu (22) déplace l'organe de soupape (26) via un engrenage (40), qui présente des repères (54) sur la roue d'engrenage (46) ou sur un disque séparé (56), enregistrés par un capteur optique (42).

16. Circuit de régulation (30) selon la revendication 15,
**caractérisé en ce que**
l'engrenage (40) est configuré de façon quasiment autobloquante.

17. Circuit de régulation (30) selon la revendication 15 ou 16,
**caractérisé en ce que**
le capteur optique (42) est une cellule de détection à faisceau direct ou une cellule de détection à réflexion.

18. Circuit de régulation (30) selon la revendication 17,
**caractérisé par**
plusieurs capteurs optiques (42).

19. Circuit de régulation (30) selon l'une des revendications 15 ou 17,
**caractérisé en ce que**
l'engrenage (40) présente au niveau d'une autre roue d'engrenage (57) une tige (44) servant de butée pour la détermination d'une position de référence.

20. Circuit de régulation (30) selon l'une des revendications 13 ou 16 à 19,
**caractérisé en ce que**
l'entraînement (22) s'arrête avant un changement de direction.

21. Circuit de régulation (30) selon la revendication 13,
**caractérisé par**
un détecteur optique codé de manière absolue.
